# EUROPÄISCHE PATENTSCHRIFT

(11) **EP 0 563 684 B1**
(45) Veröffentlichungstag und Bekanntmachung des Hinweises auf die Patenterteilung: **13.01.1999**
(21) Anmeldenummer: 93104363.2
(22) Anmeldetag: 17.03.1993
(51) Int. Cl.: G05B 23/02

(54) **Überwachungsverfahren und Beobachtungssystem für einen technischen Prozess**
Method for supervising and observing a technical process
Procédé de surveillance et système d'observation pour un processus technique

(30) Priorität: 30.03.1992 DE 4210420
(43) Veröffentlichungstag der Anmeldung: 06.10.1993
(73) Patentinhaber: SIEMENS AKTIENGESELLSCHAFT, 80333 München (DE)
(72) Erfinder: Brinzer, Peter, Dipl.-Ing. (FH), W-8524 Neunkirchen7Brand (DE)

(56) Entgegenhaltungen:
- DD-A- 279 551
- DE-A- 3 812 618
- ELEKTRIZITäTSWIRTSCHAFT, vol., no.8, 1988, page 424 - 428, HENDERIK VEENSTRA ET AL. 'LEITTECHNIK FüR SCHALTANLAGEN LSA678, ANFORDERUNGEN, REALISIERUNG, PRAKTISCHER EINSATZ'

## Beschreibung

Die vorliegende Erfindung betrifft ein Überwachungsverfahren für einen technische Prozeß und das den technischen Prozeß überwachende und steuernde Automatisierungssystem, bei dem das Automatisierungssystem Meldungen an ein dem Automatisierungssystem übergeordnetes Beobachtungssystem übermittelt, von dem die Meldungen ausgewertet werden und von dem die Auswertungsergebnisse mittels eines, vorzugsweise graphikfähigen, Anzeigegeräts darstellbar sind, sowie ein Beobachtungssystem zur Durchführung des Verfahrens.

Bei derartigen Überwachungsverfahren wird im Regelfall ein graphisches Schaubild der Anlage bzw. des Prozesses auf einem Bildschirm dargestellt. Das Beobachtungssystem übernimmt dabei insbesondere auch das Anzeigen und Dokumentieren von Meldungen. Beim Erkennen eines Fehlers in der Automatisierung, z.B. einem Drahtbruch eines Peripherieanschlusses, wird ein solcher Fehler üblicherweise graphisch in seinen Auswirkungen angezeigt, z.B. durch farbiges Markieren oder Blinken des Anlagenteils, in dem der Fehler aufgetreten ist. Außerdem wird im Regelfall ein Meldetext auf dem Bildschirm ausgegeben. Dieser Meldetext wird auch auf einem Drucker als Fehlerliste ausgedruckt.

Aus dem Aufsatz von H. Veenstra und H. Westerholt, "Leittechnik für Schaltanlagen LSA 678, Anforderungen, Realisierung, praktischer Einsatz" in "Elektrizitätswirtschaft", Jahrgang 87 (1988), Heft 8, Seiten 224 bis 228 ist ein Überwachungsverfahren für einen technischen Prozeß gemäß dem Oberbegriff des Anspruchs 1 bekannt. Das Überwachungsverfahren wird in einem Automatisierungssystem ausgeführt, das den technischen Prozeß steuert und überwacht. Dazu weist das Automatisierungssystem ein Sichtgerät auf, auf dem ein Übersichtsbild des Schaltzustandes der gesamten Anlage erkennbar ist. Wichtige Meßwerte und Summeninformationen über die Alarme sind ebenso darstellbar. Für die Durchführung von Steuerhandlungen können anlagenspezifische Detailbilder vorgesehen werden. Gleiches gilt für Warnmelde- und Ereignislisten. So kann durch Farbumschlag z.B. ein geerdeter Anlagenteil oder beispielsweise die Abschaltung eines Ein-/Ausgabegerätes eines Abzweiges durch farbige Anzeige der nicht aktualisierten Daten gekennzeichnet werden. Darüber hinaus bietet das Automatisierungssystem durch die Berechnung eines Fehlerortes auch eine Fehlerortbestimmung bei im technischen Prozeß aufgetretenen Fehlern an. Diese Fehlerortbestimmung ist mit einer gewissen, beschränkten Meßgenauigkeit behaftet. Durch die Berechnung der Fehlerorte und die entsprechende Anzeige am Sichtgerät ist die Fehlersuche wesentlich vereinfacht, so daß eine schnelle Abschaltung der von dem Fehler betroffenen Anlagenteile des technischen Prozesses möglich ist.

Gegenüber diesem Stand der Technik zeichnet sich die vorliegende Erfindung dadurch aus, daß nicht nur Fehler im überwachten und/oder gesteuerten technischen Prozeß, sondern zusätzlich auch Fehler in dem den technischen Prozeß überwachenden und steuernden Automatisierungssystem erkannt und dargestellt werden, so daß sich diese Hilfsmittel im Gegensatz zu den gemäß dem Stand der Technik angebotenen Hilfsmitteln zur Fehlerermittlung und Fehlerlokalisierung nunmehr auch auf das Automatisierungssystem selbst beziehen.

Aus dem Aufsatz von Ingo Kuhnen, "Fortschrittliche Überwachung und Bedienung von Prozessen, Anlagen und Maschinen", in:"Der Elektroniker", Nr. 2/1985, S. 44 bis 48, ist es bekannt, daß Sichtgeräte zur Überwachung von technischen Prozessen, Anlagen und Maschinen verwendet werden, wobei dazu von einer Menüsteuerung Gebrauch gemacht wird. Dieses System erlaubt ein Verwalten auch einer größeren Anzahl von Bildern. Ferner kann der Anwender je nach Einsatz mittels eines menügesteuerten Generierungsprogramms seine spezifischen Bildsymbole definieren. Durch die freie Wahl der Symbole, auch mit Text und Zahlenwerten, Alarmzeilen usw. lassen sich dann beliebige Anwendungen darstellen. Jedem Bild ist weiterhin ein einheitliches Bedienermenü unterlagert, das einen einfachen Bildaufruf ermöglicht.

Aus der DE 35 04 578 A1 ist eine numerische Werkzeugmaschinensteuerung mit einem Bildsichtgerät zum Darstellen von Bedien- und Anzeigefunktionen, einem Bedienfeld und einer Datenspeichereinrichtung bekannt, wobei für jedes anzeigbare Bild die jeweiligen Daten für feste und variable Texte und Werte, graphische Darstellungen und Listen in jeweils vorgegebenen Speicherbereichen der Datenspeichereinrichtung hinterlegbar sind, wobei ferner in einem weiteren vorgegebenen Speicherbereich des Datenspeichers die Daten für alle möglichen Folgen von Bedien- und Anzeigefunktionen registrierbar sind, wobei die Daten vorgegebener Grund- und Standardfunktionen sowie vorgegebener Standardfolgen als steuerungsspezifische Daten fest vorgegeben sind, während die übrigen Daten als maschinen- und anwenderspezifische Daten flexibel sind, wobei die Auswahl einer jeweils beginnenden Folge von Bedienund Anzeigefunktionen ab einer jeweils aktuellen Bedien- oder Anzeigefunktion dadurch erfolgt, daß fortschreitend über das Bildsichtgerät in vorgegebenen Feldern, die jeweils unmittelbar folgenden Bedien- oder Anzeigfunktionen in Titel form angeboten werden, die daraufhin nach entsprechender Tastenbetätigung auslösbar sind.

Aus dem Vortrag von R. Vahldieck "Besonderheiten der rechnergestützten Projektierung bei Hartmann & Braun", VGB-Konferenz "Leittechnik im Kraftwerk 1991" am 15./16.01.91 in Essen in Verbindung mit der Werbeschrift der Firma Hartmann & Braun "Prozeßleitsystem Contronic E" ist eine graphische Projektierung von Kraftwerksanlagen bekannt, bei der funktionsorientierte Plane für unterschiedliche Dokumentationsebenen vorgesehen sind. Dabei ist insbesondere die Verteilung von Einzelfunktionen auf die Funktionspläne unabhängig von der Verteilung der jeweiligen Einzelfunktionen auf die Systemkomponenten, so daß der graphischen Darstellung keine Information hinsichtlich des geographischen und schaltungstechnischen Ortes entnehmbar sind. Während des Betriebs des Kraftwerks werden Fehler als textuelle, alphanumerische Fehlermeldungen ausgegeben, wobei der Fehlerort nach einer Ortsalphanumerik codiert ist, jedoch keine unmittelbare graphische Anzeige des Fehlerortes erfolgt, anhand derer der Benutzer den Fehlerort sofort erkennen kann bzw. diesen durch Wechseln der jeweils dargestellten Hierarchiestufe immer genauer erkennen kann.

Es ist ferner bekannt, beim Auftreten eines Fehlers die Seite im Stromlaufplan, in dem der elektrische Fehler aufgetreten ist, auf dem Bildschirm graphisch darzustellen. Eine weitergehende Hilfe bei der Fehlersuche und der Fehlereingrenzung existiert jedoch nicht. Insbesondere ist aus dem Stromlaufplan oftmals nicht ersichtlich, an welchem geographischen Ort des Automatisierungssystems der Fehler aufgetreten ist. Es erfolgt auch keine graphische Unterstützung bezüglich der Lokalisierung des Fehlers innerhalb des Stromlaufplans.

Die Aufgabe der vorliegenden Erfindung besteht darin, den Benutzer des Automatisierungssystems bei der Fehlersuche und Fehlerlokalisierung zu unterstützen. Insbesondere soll der Benutzer am Ende der Fehlerauswertung exakt wissen, an oder in welcher Baugruppe und an welchem Ort der Fehler aufgetreten ist.

Die Aufgabe wird für ein Überwachungsverfahren der eingangs genannten Art durch die kennzeichnenden Merkmale des Anspruchs 1 gelöst. Darüber hinaus löst auch ein Bedien- und Beobachtungssystem gemäß dem Oberbegriff des Anspruchs 3, das gemäß der kennzeichnenden Merkmale dieses Anspruchs ausgestaltet ist, diese Aufgabe.

Wenn das Überwachungsverfahren mehrere Prozeßdarstellungen aufweist, ist es von Vorteil, wenn das hierarchieartig abgestufte Darstellen eines Fehlerortes von jeder Prozeßdarstellung aus startbar ist. In diesem Fall muß nämlich nicht auf die Gesamtdarstellung des Prozesses bzw. der Anlage zurückgegegangen werden, wenn irgendwo im Prozeß bzw. in der Anlage ein Fehler aufgetreten ist.

Wenn das Darstellen eines Fehlerortes in graphischer Darstellung erfolgt, ist der Fehlerort durch den Benutzer besonders leicht und schnell erfaßbar.

Wenn die Darstellungsstufen sowohl Darstellungen über den geographischen Ort als auch Darstellungen über den schalttechnischen Ort des Fehlers beinhalten, erhält der Benutzer sowohl Informationen über den Ort, an dem der Fehler aufgetreten ist, als auch Informationen über die Art des aufgetretenen Fehlers.

Wenn das Automatisierungssystem in Schaltschränken angeordnet ist, wobei jeder Schaltschrank mindestens einen Baugruppenträger mit Baugruppen aufweist, ist es von Vorteil, wenn
- bei der Darstellung des Fehlerortes zunächst der Aufbau des Schaltschrankes dargestellt wird, wobei die Baugruppe, in der der Fehler aufgetreten ist, hervorgehoben ist,
- sodann der Baugruppenträger mit Baugruppen dargestellt wird, in der sich die Baugruppe befindet, in der der Fehler aufgetreten ist, wobei die Baugruppe hervorgehoben ist, und
- gegebenenfalls der Stromlaufplan der Baugruppe, in deren Peripheriebeschaltung der Fehler aufgetreten ist, dargestellt wird, wobei der Stromkreis, in dem der Fehler aufgetreten ist, hervorgehoben ist.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Es zeigen:
- FIG 1: eine Prinzipdarstellung eines Automatisierungssystems,
- FIG 2: eine Prinzipdarstellung des Bedien- und Beobachtungssystems,
- FIG 3: eine beispielhafte Darstellung einer Anlage,
- FIG 4: eine beispielhafte Darstellung eines Regelkreises,
- FIG 5: eine Darstellung eines Schaltschranks,
- FIG 6: eine Darstellung eines Baugruppenträgers mit Baugruppen,
- FIG 7: einen Teil des Stromlaufplans der Peripheriebeschaltung einer Baugruppe,
- FIG 8: einen Schaltschrank und
- FIG 9: einen Teil des Stromlaufplans der Peripheriebeschaltung einer elektrischen Komponente.

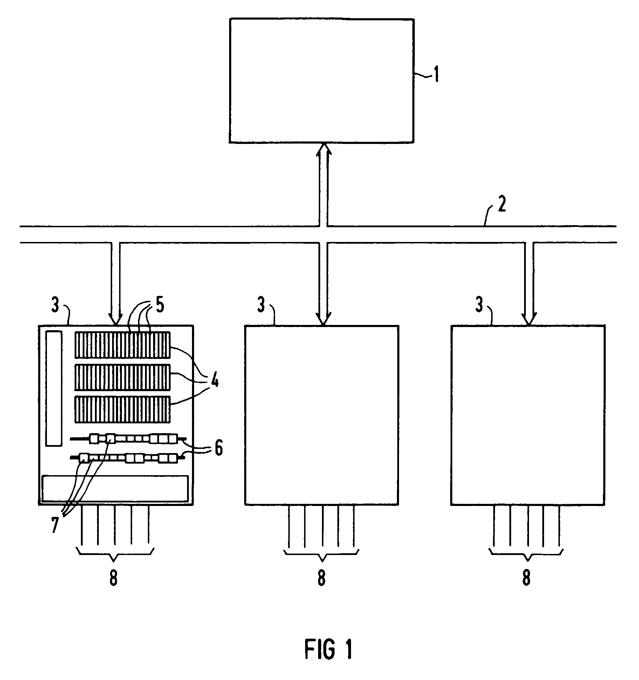

Gemäß FIG 1 besteht das Automatisierungssystem aus einem Beobachtungssystem (Bedien- und Beobachtungssystem) 1, an das über einen Bus 2 die anderen Komponenten des Automatisierungssystems angeschlossen sind. Die Komponenten sind typisch in Schaltschränken 3 angeordnet. In den Schaltschränken 3 befinden sich mehrere Baugruppenträger 4 mit Baugruppen 5 sowie mehrere Reihen 6 von elektrischen Komponenten 7. In FIG 1 wurde nur einer der Schaltschränke 3 detailliert dargestellt. Die anderen Schaltschränke 3 wurden der besseren Übersichtlichkeit halber nur schematisch dargestellt. Von den Schaltschränken 3 aus verläuft eine Vielzahl von Leitungen 8 zum gesteuerten Prozeß.

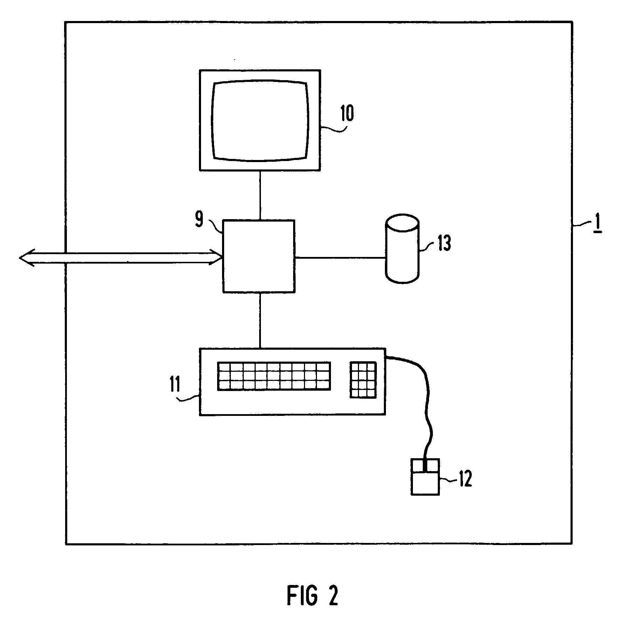

Gemäß FIG 2 weist das Bedien- und Beobachtungssystem 1 einen Prozessor 9 auf, der die vom Rest des Automatisierungssystems übertragenen Meldungen auswertet. An den Prozessor 9 sind ein graphikfähiger Monitor 10, ein Terminal 11 sowie über das Terminal 11 eine Maus 12 angeschlossen. Weiterhin ist an den Prozessor 9 ein Projektierungsdatenspeicher 13 angeschlossen, in dem die gesamten Projektierungsdaten des Automatisierungssystems abgespeichert sind. Die Projektierungsdaten umfassen u.a. die gesamten Stromlaufpläne der Anlage und die Anordnungspläne aller Aufbausysteme wie z.B. der Baugruppenträger 4 und der Schränke 3 mit allen Kennzeichungsdaten und Parametern.

Im Normalbetrieb des Automatisierungssystems wird auf dem Monitor 10 ein Schaubild der Anlage, ein Schaubild eines Teils der Anlage, ein Schaubild des Prozesses bzw. ein Schaubild eines Teils des Prozesses dargestellt. Das dargestellte Bild der Anlage bzw. des Prozesses wird dabei laufend aufgrund von Bedienungen oder Meldungen, die das Automatisierungssystem an das Bedien- und Beobachtungssystem 1 übermittelt, aktualisiert.

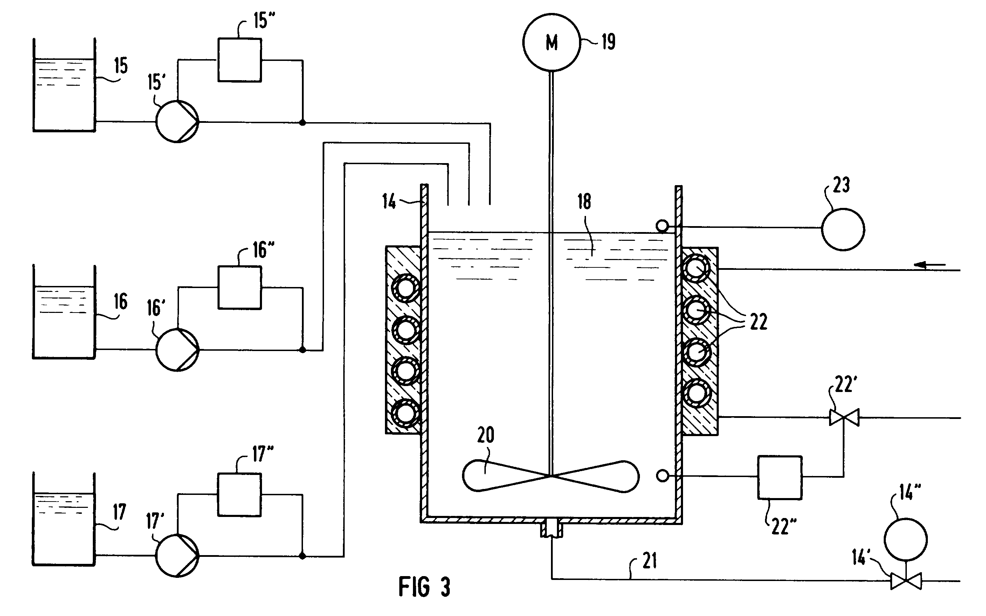

FIG 3 zeigt eine solche Darstellung der zu führenden Anlage auf dem Monitor 10. Gemäß FIG 3 wird ein Reaktor 14 aus Vorratsbehältern 15 bis 17 über Pumpen 15' bis 17' beschickt. Die Pumpen 15' bis 17' werden durch Durchflußregler 15" bis 17" geregelt. Im Reaktor 14 wird ein Reaktorgemisch 18 durch einen von einem Motor 19 angetriebenen Rührer 20 vermischt. Das Reaktorgemisch 18 fließt über eine Leitung 21 durch ein Ventil 14' ab. Das Ventil 14' wird dabei von einer Abflußsteuerung 14" gesteuert. Weiterhin ist im Schaubild gemäß FIG 3 noch ein Temperaturregler 22" dargestellt, der über ein Ventil 22' die Zufuhr von Heißwasser zu Heizschlangen 22 derart regelt, daß im Reaktorgemisch 18 ein vorbestimmter Temperaturbereich eingehalten wird. Ferner ist in der Darstellung gemäß FIG 3 noch ein Niveauregler 23 dargestellt, der als übergeordneter Regler den Durchflußreglern 15" bis 17" und der Abflußsteuerung 14" ihre Sollwerte vorgibt.

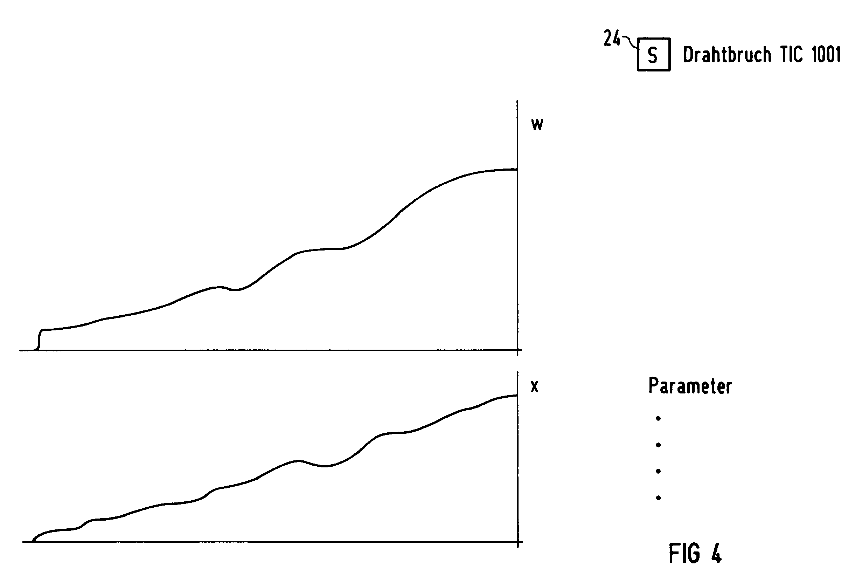

Eine Darstellung gemäß FIG 3, die eine Volldarstellung der gesamten Anlage oder aber auch nur ein Teilausschnitt sein kann, auf dem Monitor 10 des Bedien- und Beobachtungssystems 1 ist bei automatisierten Prozessen durchaus üblich. Auch eine Darstellung wie sie in FIG 4 gezeigt ist, ist allgemein üblich. Hier ist z.B. der zeitliche Verlauf von Sollwert w und Istwert x eines der Regelkreise des Reaktors 14 dargestellt. Weiterhin werden gemäß FIG 4 auf dem Bildschirm im Bedien- und Beobachtungssystem 1 auch noch die Regelkreisparameter dargestellt.

Wenn nun in der überwachten Anlage bzw. im überwachten Prozeß ein Leittechnikfehler auftritt, so erfolgt eine entsprechende Meldung an das Bedien- und Beobachtungssystem 1. Als Leittechnikfehler wird dabei jeder Fehler im Automatisierungssystem angesehen, z.B. ein Drahtbruch in einer der Leitungen 8. Die an das Bedien- und Beobachtungssystem 1 übertragene Meldung umfaßt zumindest folgende Informationen:
- Einen Code für die Art des aufgetretenen Fehlers,
- einen Code für den Ort des Fehlers sowie
- die Zeit des Fehlers.

Der Ort des Fehlers kann z.B. implizit dadurch gegeben sein, daß die Adresse des Automatisierungsgeräts sowie die Adresse der Baugruppe 5', in der der Fehler aufgetreten ist, bzw. die Kennzeichnung der elektrischen Komponente 7', z. B. eines Sicherungsautomaten, in der der Fehler aufgetreten ist, übertragen wird. Die Adresse bzw. die Kennzeichnung ist zunächst nur logisch, also nicht physikalisch auf den tatsächlichen Ort, z.B. den Steckplatz, bezogen. Erst durch den Vergleich von Adresse bzw. Kennzeichnung mit den Projektierungsdaten ist der tatsächliche Fehlerort bestimmbar. Die Zeit, zu der der Fehler aufgetreten ist, kann entweder vom Bedien- und Beobachtungssystem 1 bestimmt werden oder aber die Zeit wird ebenfalls mit übertragen.

Der Fehler wird unmittelbar nach seiner Meldung sofort in das momentan dargestellte Bild eingeblendet, unabhängig davon, ob das momentan dargestellte Bild den Gesamtprozeß, die Gesamtanlage oder Teile davon darstellt. Schematisch ist dies in FIG 4 für einen detektierten Drahtbruch gezeigt.

Wenn der Benutzer der Anlage die Fehlermeldung nicht ignorieren will, sondern den Fehler genauer lokalisieren will, gibt er ein entsprechendes Kommando auf dem Terminal 11 ein, um den geographischen und den schalttechnischen Ort des Fehlers näher zu betrachten.

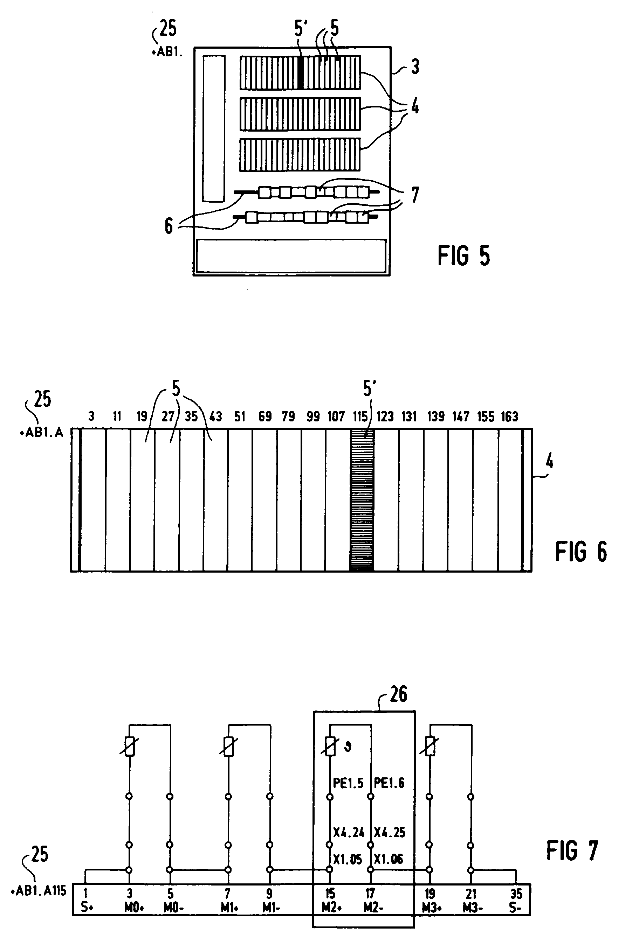

Die Eingabe kann z.B. die Eingabe des Kommandos "Control-S" sein. Wenn dem Benutzer die Maus 12 zur Verfügung steht, ist es in besonders einfacher Weise möglich, die Fehlerbetrachtung aufzurufen. In diesem Fall muß der Benutzer nämlich lediglich Anzeigefeld 24, das eine Sondermeldung anzeigt, mit der Maus 12 anklicken. Wenn der Benutzer die Fehlerdarstellungsfunktion aufruft, erhält er als nächstes eine Darstellung des Schaltschranks 3, in dem der Fehler aufgetreten ist. Diese Darstellung ist in FIG 5 gezeigt.

Zur Darstellung des Fehlers auf dem Monitor 10 werden vom Prozessor 9 die Projektierungsdaten des Automatisierungssystems aus dem Projektierungsdatenspeicher 13 abgerufen. Anhand dieser Projektierungsdaten bestimmt der Prozessor 9 den Schaltschrank 3, in dem der Fehler aufgetreten ist, sowie dessen geometrischen Aufbau. Dieser Aufbau wird gemäß FIG 5 bei Aufruf des Fehlerdarstellungsprogramms auf dem Monitor 10 dargestellt. Zusätzlich wird die Nummer, ggf. auch der Ort des Schaltschranks 3 im Anzeigefeld 25 angezeigt.

Im vorliegenden Fall sei angenommen, daß der Fehler in der Peripheriebeschaltung der Baugruppe 5' des obersten der Baugruppenträger 4 aufgetreten ist. Diese Baugruppe 5' wird daher optisch hervorgehoben, z.B. durch farbige Markierung, wie in FIG 5 dargestellt, oder durch Blinken.

Wenn der Benutzer der Anlage den Fehler noch näher betrachten will, kann er wieder ein Kommando eingeben, z.B. "Control-N", oder aber mit der Maus 12 den obersten der Baugruppenträger 4 anklicken. Daraufhin erhält er, wie in FIG 6 gezeigt, eine Darstellung dieses Baugruppenträgers 4. Auch diese Darstellung wird vom Prozessor 9 anhand der Projektierungsdaten ermittelt.

Gemäß FIG 6 wird nun auf dem Monitor 10 im Anzeigefeld 25 die Nummer des Schaltschranks 3 und die des Baugruppenträgers 4 eingeblendet, der dargestellt wird. Die Darstellung des Baugruppenträgers 4 ist wie in FIG 5. Auch hier sind wieder die Baugruppen 5 dargestellt, wobei die fehlerhafte Baugrupe 5' optisch hervorgehoben ist. Mit dieser Darstellung ist der geographische Ort des Fehlers, nämlich die fehlerhafte Baugruppe 5', hinreichend lokalisiert. Wenn die fehlerhafte Baugruppe 5' selbst defekt ist, ist die Darstellung gemäß FIG 6 abschließend. Bei Drahtbrüchen dagegen kann dem Benutzer außer dem geographischen Ort auch noch der schalttechnische Ort des Fehlers gemeldet werden.

Um im Falle eines Drahtbruchs auch den schalttechnischen Ort des Fehlers zu erfahren, klickt der Benutzer die fehlerhafte Baugruppe 5' mit der Maus 12 auf dem Monitor 10 an und erhält die Darstellung gemäß FIG 7. FIG 7 zeigt den Teil des Stromlaufplans, in dem der Fehler aufgetreten ist. Auch der Stromlaufplan wurde vom Prozessor 9 mittels der Projektierungsdaten aus dem Projektierungsdatenspeicher 13 ermittelt. Im Anzeigefeld 25 werden dabei die Nummern von Schaltschrank 3, Baugruppenträger 4, Baugruppe 5' und der Seite des Stromlaufplans angezeigt. Ebenso wird auf dem Monitor 10 der Stromlaufplan dieser Seite dargestellt.

Wiederum ist der, diesmal schalttechnische, Ort des Fehlers optisch hervorgehoben, z.B. durch Blinken der Umrandung 26. Zusätzlich kann auf dem Monitor 10 eine Meldung über die Art des Fehlers erfolgen.

Um den Fehler, den geographischen Ort des Fehlers und den schalttechnischen Ort des Fehlers, darstellen zu können, müssen selbstverständlich nicht nur die gesamten Projektierungsdaten vom Bedien- und Beobachtungssystem 1 aus per Rechner abrufbar sein. Die Projektierungsdaten des Automatisierungssystems müssen selbstverständlich auch auf dem aktuellen Stand sein, da ansonsten sinnlose Fehlermeldungen erfolgen würden.

Weiterhin muß die Fehlererkennung im Automatisierungssystem derart genau erfolgen, daß jeder Fehler exakt lokalisierbar ist. Es genügt also nicht, lediglich einen Fehler zu erkennen, sonder es müssen zumindest der Fehlercode und die Adresse bzw. die Kennzeichnung der Komponente, in der der Fehler aufgetreten ist, übertragen werden.

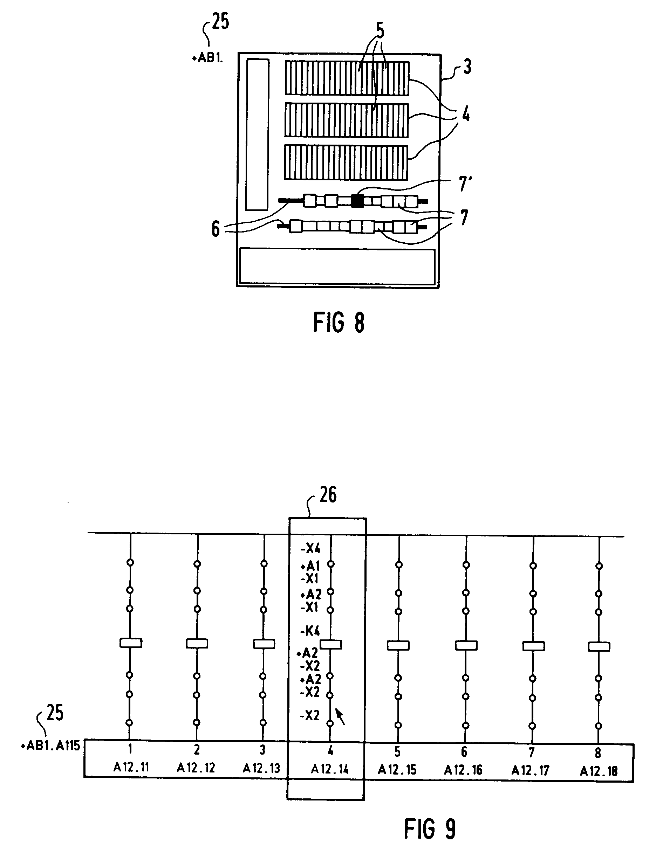

Gemäß FIG 8, die ebenfalls die Darstellung des gesamten Schaltschranks 3 zeigt, ist ein Fehler in der elektrischen Komponente 7' detektiert worden. Wenn die fehlerhafte elektrische Komponente 7' selbst keine Meldung an das Bedien- und Beobachtungssystem 1 übermitteln kann, muß diese indirekt über ein Automatisierungsgerät erfolgen, das diesen Fehler dann an das Bedien- und Beobachtungssystem 1 weitermeldet. Hierzu wird ein Signal, das von der fehlerhaften elektrischen Komponente 7' bei einem Fehler ausgelöst wird, als Eingangssignal eines Automatisierungsgeräts verwendet, wobei das Automatisierungsgerät derart programmiert ist, daß es bei Anliegen des Fehlersignals diesen Fehler an das Bedien- und Beobachtungssystem 1 meldet.

Auch dieser Fehler wird nach Abruf der Projektierungsdaten vom Prozessor 9 auf dem Monitor 10 angezeigt. Die Anzeige folgt wie zuvor bei der fehlerhaften Baugruppe 5' durch optische Hervorhebung. Der geographische Ort des Fehlers ist damit hinreichend lokalisiert. Nach Anklicken der fehlerhaften elektrischen Komponente 7' wird auf dem Monitor 10 wieder der Teil des Stromlaufplans dieser fehlerhaften elektrischen Komponente 7' dargestellt, in der der Fehler aufgetreten ist. Der Fehler ist wieder, z.B. mittels der blinkenden Umrandung 26, optisch hervorgehoben.

Im obenstehend beschriebenen Ausführungsbeispiel wurde nur die Detektierung und Darstellung elektrischer Fehler beschrieben. Wenn die Projektierungsdaten auch die Programme für die einzelnen Teile des Automatisierungssystems enthalten, ist selbstverständlich auch die Detektierung und Darstellung von Programmfehlern (z.B. Grenzwertüberschreitung eines Softwarereglers oder Zeitüberlauf einer Ablaufebene) möglich.

Abschließend ist festzustellen, daß die Fehlerlokalisierung und die Fehlerdiagnose vom Bedien- und Beobachtungssystem 1 aus mittels des vorstehend beschriebenen Überwachungsverfahrens erheblich erleichtert wird. Zur Durchführung des Verfahrens werden außer einem graphikfähigen Monitor, der in Leitwarten üblicherweise sowieso vorhanden ist, noch ein Datenspeicher, z.B. eine Hard-Disk, benötigt, auf der die gesamten, aktuellen, Projektierungsdaten abgespeichert sind und von dem diese Daten vom Leitwartenrechner aus online abrufbar sind. Der Nutzen der Erfindung liegt in der schnellen Lokalisierung des Fehlerortes von der Leitwarte aus. Darüber hinaus ist es nicht mehr nötig, umständlich in Schaltbüchern aus Papier zu suchen.

Das Überwachungsverfahren kann selbstverständlich nicht nur in der Leitwarte erfolgen, sondern prinzipiell von jedem Rechner aus, der einen graphikfähigen Monitor und Zugriff auf die Projektierungsdaten hat. Es ist z.B. möglich, die Schaltschränke 3 über ein local area network (LAN) miteinander zu verbinden und Möglichkeiten zum Anschalten eines graphikfähigen Programmiergeräts an das local area network vorzusehen. Wenn dann die Projektierungsdaten, z.B. mittels einer Diskette, dem Programmiergerät zur Verfügung stehen, kann das Verfahren selbstverständlich auch mittels des Programmiergeräts ausgeführt werden.

## Patentansprüche

1. Überwachungsverfahren für einen technischen Prozeß,
- wobei ein den technischen Prozeß überwachendes und steuerndes, in Baugruppenträger (4) mit Baugruppen (5) enthaltenden Schaltschränken (3) angeordnetes Automatisierungssystem vorgesehen ist, bei dem das Automatisierungssystem Meldungen über Fehler im technischen Prozeß an ein dem Automatisierungssystem übergeordnetes Beobachtungssystem (1) übermittelt, von dem diese ausgewertet und mittels eines Anzeigegerätes (10) graphisch dargestellt werden,
- wobei dem Beobachtungssystem (1) die wesentlichen Projektierungsdaten des Automatisierungssystems zugänglich sind,
- wobei mit Erkennen eines Fehlers im technischen Prozeß der geographische und schaltungstechnische Fehlerort in einer Gesamt- oder Detailansicht darstellbar ist,
**dadurch gekennzeichnet,**
- daß auch Fehler im Automatisierungssystem vom Beobachtungssystem (1) erkannt und angezeigt werden,
- daß der jeweilige Fehlerort derart darstellbar ist, daß
- zunächst der Aufbau des Schaltschrankes (3) dargestellt wird, wobei die in ihm befindliche fehlerhafte Baugruppe (5') hervorgehoben ist,
- dann der Baugruppenträger (4) mit seinen Baugruppen (5) dargestellt wird, unter denen sich die fehlerhafte Baugruppe (5') befindet, welche wiederum hervorgehoben ist, und
- dann der Stromlaufplan dieser fehlerhaften Baugruppe (5') unter bedarfsweiser Hinzufügung der Peripherieschaltung dargestellt wird, wobei der Stromkreis, in dem der Fehler aufgetreten ist, hervorgehoben ist.

2. Überwachungsverfahren nach Anspruch 1, **dadurch gekennzeichnet,** daß zusätzlich zu elektrischen Fehlern auf Programmierfehler detektier- und darstellbar sind.

3. Beobachtungssystem, insbesondere Bedien- und Beobachtungssystem, für die Überwachung eines technischen Prozesses,
- mit einem Prozessor (9), der von einem den technischen Prozeß steuernden und überwachenden, in Baugruppenträger (4) mit Baugruppen (5) enthaltenden Schaltschränken (3) angeordneten Automatisierungssystem übertragene Meldungen auswertet,
- mit einem graphikfähigen Anzeigegerät (10) mit dem die Auswertungsergebnisse graphisch darstellbar sind und
- mit einem Projektierungsdatenspeicher (13), vorzugsweise einem Massenspeicher (13), in dem die wesentlichen, vorzugsweise die gesamten Projektierungsdaten des Automatisierungssystems abgespeichert sind, der mit dem Prozessor (9) zugreifbar verbunden ist,
- wobei mit Erkennen eines Fehlers im technischen Prozeß der geographische und schaltungstechnische Fehlerort in einer Gesamt- oder Detailansicht darstellbar ist,
**dadurch gekennzeichnet,**
- daß auch Fehler im Automatisierungssystem vom Beobachtungssystem (1) erkennbar und darstellbar sind,
- daß der jeweilige Fehlerort derart darstellbar ist, daß
- zunächst der Aufbau des Schaltschrankes (3) darstellbar ist, wobei die in ihm befindliche fehlerhafte Baugruppe (5') hervorhebbar ist,
- dann der Baugruppenträger (4) mit seinen Baugruppen (5) darstellbar ist, unter denen sich die fehlerhafte Baugruppe (5') befindet, welche wiederum hervorhebbar ist, und
- dann der Stromlaufplan dieser fehlerhaften Baugruppe (5') unter bedarfsweiser Hinzufügung der Peripherieschaltung darstellbar ist, wobei der Stromkreis, in dem der Fehler aufgetreten ist, hervorhebbar ist.

4. Beobachtungssystem nach Anspruch 3, **dadurch gekennzeichnet,** daß zusätzlich zu elektrischen Fehlern auf Programmierfehler detektier- und darstellbar sind.

## Claims

1. Monitoring method for a technical process
- whereby an automation system is provided which monitors and controls the technical process and which is arranged in control cabinets (3) containing subracks (4) with modules (5), where the automation system transmits messages about faults in the technical process to an observation system (1) which is higher-ranking than the automation system, with these messages being evaluated by the observation system and being graphically displayed by means of a display unit (10),
- whereby the important planning and design data of the automation system is accessible to the observation system (1),
- whereby, upon the detection of a fault in the technical process, the fault location in terms of geography and circuit engineering can be displayed in a general or detailed view,
characterized in that
- faults in the automation system are also detected and displayed by the observation system (1),
- the respective fault location can be displayed in such a way that
- first of all the design of the control cabinet (3) is displayed, with the defective module (5') located therein being emphasized,
- the subrack (4) is then displayed with its modules (5) among which the defective module (5') is located, which is in turn emphasized, and
- the circuit diagram of this defective module (5') is then displayed with the addition, if necessary, of the peripheral circuit, with the circuit in which the fault has occurred being emphasized.

2. Monitoring method according to claim 1, characterized in that, in addition to electrical faults, programming faults can be detected and displayed.

3. Observation system, in particular a control and observation system, for monitoring a technical process,
- having a processor (9) which evaluates messages transmitted by an automation system which controls and monitors the technical process and which is arranged in control cabinets (3) containing subracks (4) with modules (5),
- having a display device (10) with graphics capabilities, with which device the evaluation results can be graphically displayed, and
- having a planning and design data memory (13), preferably a mass memory (13), in which the important, preferably all the planning and design data of the automation system is stored, and which, is connected to the processor (9) in an accessible manner,
- whereby, upon the detection of a fault in the technical process, the fault location in terms of geography and circuit engineering can be displayed in a general or detailed view,
characterized in that
- faults in the automation system can also be detected and displayed by the observation system (1),
- the respective fault location can be displayed in such a way that
- first of all the design of the control cabinet (3) can be displayed, whereby the defective module (5') located therein can be emphasized,
- the subrack (4) can then be displayed with its modules (5) among which the defective module (5') is located, which in turn can be emphasized, and
- the circuit diagram of this defective module (5') can then be displayed with the addition, if necessary, of the peripheral circuit, whereby the circuit in which the fault has occurred can be emphasized.

4. Observation system according to claim 3, characterized in that, in addition to electrical faults, programming faults can be detected and displayed.

## Revendications

1. Procédé de surveillance pour un processus technique,
- un système d'automatisation surveillant et commandant le processus technique, monté dans des armoires (3) de commande contenant des portes modules (4) avec des modules (5), étant prévu, dans lequel le système d'automatisation transmet des messages concernant des erreurs dans le processus technique à un système (1) d'observation hiérarchiquement supérieur au système d'automatisation, le système d'observation exploitant ces messages et ces messages étant présentés graphiquement au moyen d'un appareil (10) d'affichage,
- les données de projection essentielles du système d'automatisation étant accessibles au système (1) d'observation,
- le lieu géographique de l'erreur et le lieu de l'erreur du point de vue de la technique des circuits pouvant, par reconnaissance d'une erreur dans le processus technique, être présenté dans une vue globale ou détaillée,
caractérisé en ce que
- des erreurs dans le système d'automatisation peuvent aussi être reconnues et affichées par le système (1) d'observation,
- le lieu associé de l'erreur peut être présenté de telle manière que
- il est présenté d'abord la structure de l'armoire (3) de commande, le module (5') défectueux qui s'y trouve étant mis en évidence,
- il est ensuite présenté le porte modules (4) avec ses modules (5) parmi lesquels se trouve le module (5') défectueux qui est à nouveau mis en évidence, et
- le plan des connexions de ce module (5') défectueux est ensuite présenté, en ajoutant au besoin le circuit périphérique, le circuit de courant dans lequel l'erreur s'est produite étant mis en évidence.

2. Procédé de surveillance suivant la revendication 1, caractérisé en ce que, en plus d'erreurs électriques, il peut être détecté et présenté des erreurs de programmation.

3. Système d'observation, notamment système de commande et d'observation, pour la surveillance d'un processus technique,
- comportant un processeur (9) qui exploite des messages transmis par un système d'automatisation commandant et surveillant le processus technique, monté dans des armoires (3) de commande contenant des portes modules (4) avec des modules (5),
- comportant un appareil (10) d'affichage capable de présentation graphique, par lequel les résultats d'exploitation peuvent être présentés graphiquement, et
- comportant une mémoire (13) de données de projection, de préférence une mémoire (13) de grande capacité, dans laquelle les données de projection essentielles, de préférence toutes les données de projection essentielles, du système d'automatisation sont enregistrées, la mémoire étant reliée de manière accessible au processeur (9),
- le lieu géographique de l'erreur et le lieu de l'erreur du point de vue technique pouvant être présentés dans une vue globale ou dans une vue détaillée avec la reconnaissance d'une erreur dans le processus technique,
caractérisé en ce que
- aussi des erreurs dans le système d'automatisation peuvent être reconnues et présentées par le système (1) d'observation,
- le lieu associé de l'erreur peut être présenté de telle manière que
- il est présenté d'abord la structure de l'armoire (3) de commande, le module (5') défectueux qui s'y trouve étant mis en évidence,
- il est présenté ensuite le porte modules (4) avec ses modules (5) parmi lesquels se trouve le module (5') défectueux qui est à son tour mis en évidence, et
- il est représenté ensuite le plan des connexions de ce module (5') défectueux, en ajoutant au besoin le circuit périphérique, le circuit de courant dans lequel l'erreur s'est produite pouvant être mis en évidence..

4. Système d'observation suivant la revendication 3, caractérisé en ce que, en plus d'erreurs électriques, il peut être détecté et présenté des erreurs de programmation.
